# EUROPEAN PATENT APPLICATION

(11) **EP 3 876 135 A2**
(43) Date of publication of application: **08.09.2021**
(21) Application number: 21158934.6
(22) Date of filing: 24.02.2021
(51) Int. Cl.: G06F 30/20, G06F 111/10, G06F 119/08

(54) **ARITHMETIC METHOD AND ARITHMETIC DEVICE**

(30) Priority: 02.03.2020 JP 2020035205; 07.01.2021 JP 2021001394
(71) Applicant: Kabushiki Kaisha Toshiba, Minato-ku Tokyo 105-0023 (JP); Toshiba Electronic Devices & Storage Corporation, Tokyo 105-0023 (JP)
(72) Inventor: Imi, Hitoshi, Tokyo, 105-0023 (JP); Okano, Motochika, Tokyo, 105-0023 (JP)
(74) Representative: Hoffmann Eitle

(57) **Abstract**

An arithmetic method according to the present embodiment comprises a model creation step (S102), and an operation model creation step (S108). The model creation step (S102) creates a simulation model based on the detailed model. The operation model creation step (S108) creates an operation model that is longer than the detailed model corresponding thereto in an interval of calculation steps by simulating physical characteristics to be observed based on the simulation model.

## Description

### FIELD

Embodiments of the present invention relate to an arithmetic method and an arithmetic device.

### BACKGROUND

For an electric circuit using a designed element, circuit simulation is performed in order to evaluate the electrical operation characteristics. This circuit simulation is performed by a circuit simulator such as a SPICE (Simulation Program with Integrated Circuit Emphasis) that strictly considers physical characteristics.

Further, in a case of using the designed element in an automobile or an aircraft, its temperature characteristics and the like are regarded as important for security. Therefore, for the electric circuit, temperature simulation for the temperature characteristics is sometimes performed in addition to simulation for the electrical operation characteristics.

In this circuit simulation, many elements of the electric circuit, such as a transistor, a resistor, and a capacitor, are modeled as element models, and a transient phenomenon is computed. Meanwhile, the temperature simulation is generally computed by using a power generated by each element model.

However, the temperature simulation requires analysis of a time constant of the responsiveness of each element for a sufficiently long time. Therefore, strict computation of the transient phenomenon of the electric circuit including many elements takes a lot of time.

### BRIEF DESCRIPTION OF THE DRAWINGS

FIG. 1 is a block diagram illustrating a configuration of an arithmetic device according to a first embodiment;
FIG. 2 is a diagram illustrating a configuration example of a model;
FIG. 3 is a diagram illustrating an example of an element model;
FIG. 4 is a diagram illustrating an example in which a plurality of selectable models are displayed;
FIG. 5 is a diagram illustrating an example in which a plurality of selectable element models are displayed on a monitor;
FIG. 6 is a diagram illustrating examples of command values selectable for a selected model;
FIG. 7 is a diagram illustrating an image example to be displayed on the monitor during simulation;
FIG. 8 is a diagram illustrating a simulation result of power generation at the time of switching;
FIG. 9 is a diagram illustrating an image example during simulation by a thermal model;
FIG. 10 is a diagram illustrating an example of simulation using a thermal model and simulation using a high-accuracy model;
FIG. 11 is a flowchart illustrating a computation example by the arithmetic device;
FIG. 12 is a block diagram illustrating a configuration of an arithmetic device according to a second embodiment;
FIG. 13 is a diagram illustrating an example of a simple model obtained by simplifying an element model;
FIG. 14 is a diagram illustrating an image example of a model including a mechanical model;
FIG. 15 is a diagram illustrating an image example of a model including a mechanical model during temperature simulation;
FIG. 16 is a flowchart illustrating an example of temperature simulation of a circuit model;
FIG. 17 is a block diagram illustrating a configuration of an arithmetic device according to a third embodiment;
FIG. 18 is a flowchart illustrating an operation example of an execution processor;
FIG. 19 is a flowchart of a detailed processing example at Step S402 in FIG. 18;
FIG. 20 is a diagram schematically illustrating the processing example in FIG. 19 in chronical order;
FIG. 21 is a block diagram illustrating a configuration of an arithmetic device according to a fourth embodiment;
FIG. 22 is a flowchart illustrating an operation example of an execution processor according to the fourth embodiment; and
FIG. 23 is a flowchart illustrating a detailed processing example at Step S602 in FIG. 22.

### DETAILED DESCRIPTION

An arithmetic method according to the present embodiment comprises a model creation step, an execution processing step, and a thermal model creation step. The model creation step creates a circuit model in which a plurality of element models each having information on electrical characteristics of a switching element are connected to each other. The execution processing step computes, by using the information on the electrical characteristics of each of the element models, a power generated at each time step by switching of the element model with respect to a predetermined time-series input value in time series. The thermal model creation step creates a thermal model that outputs an output value based on an integrated value obtained by integrating the power generated at the each time step, in accordance with switching of the element model.

An arithmetic method and an arithmetic device according to embodiments of the present invention will now be explained in detail with reference to the accompanying drawings. The embodiments described below are only examples of the embodiments of the present invention and it is not to be understood that the present invention is limited to these embodiments. In the drawings referred to in the embodiments, same parts or parts having identical functions are denoted by like or similar reference characters and there is a case where redundant explanations thereof are omitted. Further, for convenience of explanation, there are cases where dimensional ratios of the parts in the drawings are different from those of actual products and some part of configurations is omitted from the drawings.

### (First embodiment)

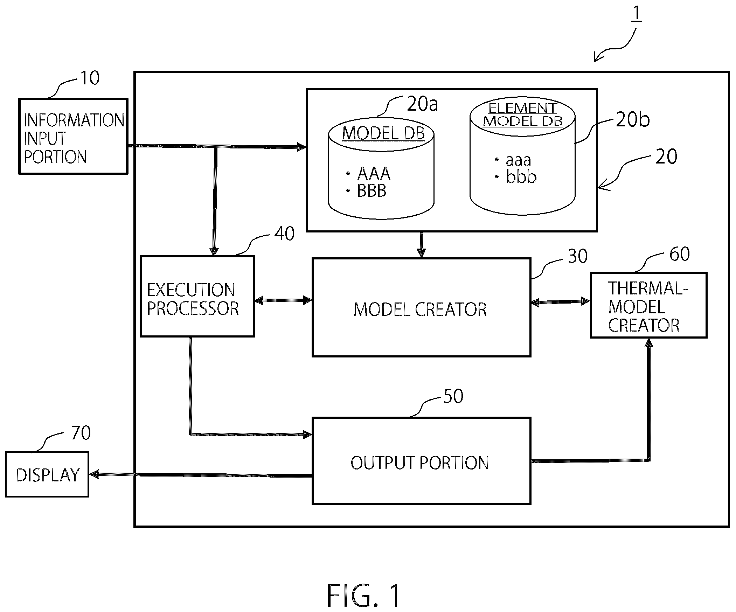

FIG. 1 is a block diagram illustrating a configuration of an arithmetic device 1 according to a first embodiment. As illustrated in FIG. 1, the arithmetic device 1 according to the present embodiment is a SPICE, for example, and is a circuit simulator device that carries out circuit simulation. This arithmetic device 1 includes an information input portion 10, a storage 20, a model creator 30, an execution processor 40, an output portion 50, a thermal-model creator 60, and a display 70. This arithmetic device 1 is implemented by a desktop personal computer, for example. That is, the arithmetic device 1 is configured to include a CPU (Central Processing Unit), for example.

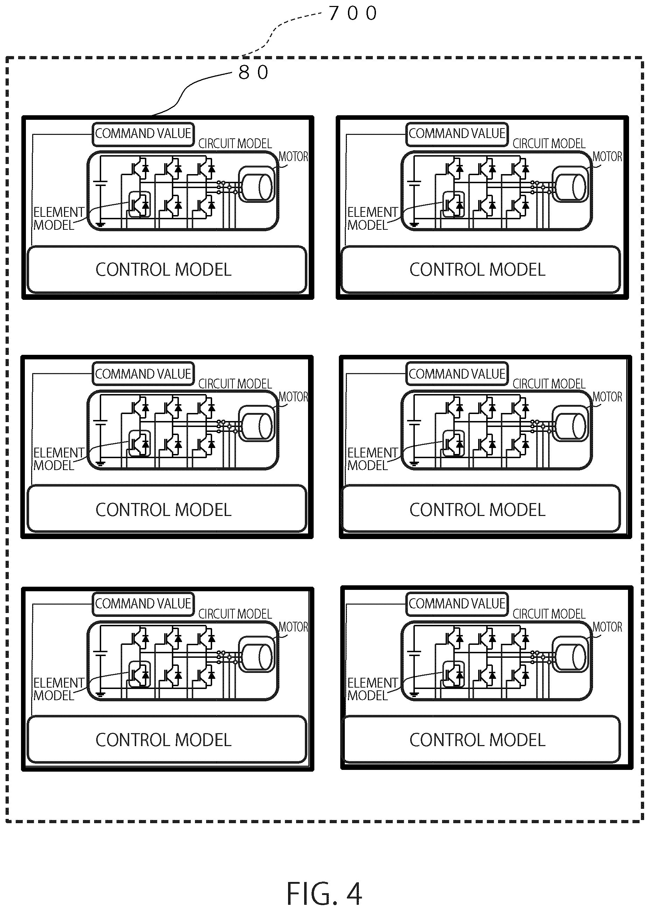

The information input portion 10 includes, for example, a keyboard and a pointing device, and outputs an instruction signal in accordance with an operation by a user using the arithmetic device 1 to the storage 20, the model creator 30, and the execution processor 40. For example, an instruction signal output from the information input portion 10 includes any of circuit information that is instruction information configuring a circuit model, part information that is instruction information configuring an element model, and analysis setting information that is a condition under which circuit simulation is carried out. Details of an instruction operation of the information input portion 10 are described later with reference to FIGS. 4 to 6.

The storage 20 is configured by an HDD (hard disk drive), an SSD (solid state drive), or the like. The storage 20 includes a model database 20a and an element model database 20b. The model database 20a stores therein information on a plurality of models 80. The element model database 20b stores therein a plurality of element models 88 configuring the models 80. The storage 20 also stores therein various types of programs for carrying out simulation. Accordingly, the arithmetic device 1 configures each portion, for example, by executing the programs stored in the storage 20. Although each portion according to the present embodiment is configured by execution of the programs stored in the storage 20, the manner of configuring each portion is not limited thereto. For example, the model creator 30, the execution processor 40, the output portion 50, and the thermal-model creator 60 may be configured by circuits.

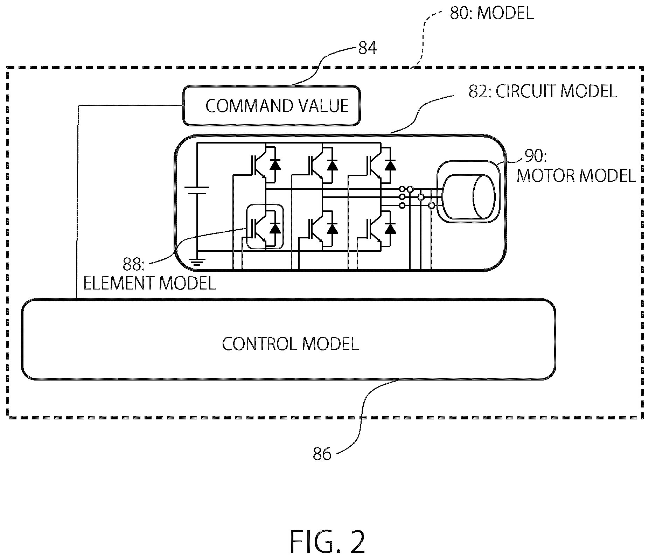

FIG. 2 is a diagram illustrating a configuration example of the model 80. As illustrated in FIG. 2, the model 80 is, for example, a model of an inverter device that rotates a motor. This model 80 is a model configured by characteristics information of the inverter device that is an object of simulation. This model 80 includes, for example, a circuit model 82, a command-value input portion 84, and a control model 86. The circuit model 82 includes a plurality of the element models (detailed models) 88 and a motor model (an operation model) 90. Details of the model 80 are described later.

The model creator 30 configures the model 80 in accordance with information input from the information input portion 10. The model creator 30 also configures the element models 88 in the model 80 in accordance with the input information. For example, the element models 88 in the model 80 can be changed in accordance with input from the information input portion 10.

The execution processor 40 performs computation of currents and voltages of each element model 88 and a wire in the model 80 for each calculation step, by using information of the configured model 80. This execution processor 40 computes a circuit equation, for example, a first-order linear differential equation or a second-order linear differential equation, which follows the laws of physics including the Kirchhoff's law, for each calculation step and computes transient responses of the current and the voltage for each calculation step.

The output portion 50 stores therein the result of processing performed by the execution processor 40 for each calculation step and outputs the result to the thermal-model creator 60. That is, the output portion 50 includes an auxiliary storage. This auxiliary storage is configured by an HDD (hard disk drive), an SSD (solid state drive), or the like. Further, the output portion 50 creates a display image and outputs the display image to the display 70.

The thermal-model creator 60 integrates a power generated by switching of the element model 88, and creates a thermal model that indicates a value corresponding to a power generated every time the element model 88 performs switching, as an operation model. Details of the thermal-model creator 60 are also described later.

A detailed model according to the present embodiment is a model in which the physical characteristics of each part are defined. The detailed model is, for example, a model operable at a calculation step that can also compute a transient response and the like. In the present embodiment, the detailed model may be referred to as "high-accuracy model".

A simple model according to the present embodiment is a model obtained by simplifying the detailed model and is, for example, a model obtained by averaging the response characteristics of the detailed model at a longer time interval. Therefore, calculation steps of the simple model can be configured to have a longer interval than calculation steps of the detailed model.

An operation model according to the present embodiment is a model obtained by simplifying the detailed model while the physical characteristics of the detailed model are specialized on a specific physical phenomenon. Calculation steps of the operation model can be configured to have a longer interval than the calculation steps of the detailed model, and can be configured to have a shorter interval than the calculation steps of the simple model.

The display 70 is, for example, a monitor. The display 70 displays image information input from the output portion 50.

Here, details of the model 80 are described. As illustrated in FIG. 2, the circuit model 82 has information on the electrical characteristics of parts that constitute a circuit. The circuit model 82 includes, for example, a plurality of the element models 88 and the motor model 90. The element model 88 has, for example, information on a relation of connection between a resistive element, a capacitive element (a capacitor), a passive element (a coil) that stores energy in a magnetic field, and a switching element (for example, a MOSFET) that is an active element, and information on the electrical characteristics of each element. Details of the element model 88 are described later.

The motor model 90 has information on the electrical characteristics of a motor. For example, information on a relation between a current and a voltage to be supplied and a generated motor torque is defined in the motor model 90. Accordingly, when a time-series current value and a time-series voltage value are supplied to the motor model 90, for example, a time-series motor torque is output.

The command-value input portion 84 inputs a time-series command value for causing the model 80 to operate. In a case where the model 80 is an inverter device, for example, the command value is a control value that causes the time-series motor torque to be generated. In a case where the model 80 is an inverter device, a power supply model (not illustrated) is also included. The command value and the motor torque value may be actual data acquired from an actual device, for example. Alternatively, those values may be simulation values computed in conjunction with a mechanical model as described later. Accordingly, it is possible to compute a current value and a voltage value that are values when the inverter device as an object of simulation is caused to generate the motor torque by using the control command value, for each calculation step. That is, a relation between the time-series command value that causes the time-series motor torque to be generated and the current value and the voltage value that cause the time-series motor torque to be generated is an operation model in the present embodiment.

The control model (the operation model) 86 is a model performing an operation of a control device that controls the model 80 in accordance with the time-series command value. The control model 86 has information on a circuit configuration in the control device, and can output a control signal to each constituent element in the model 80 when the time-series command value is input to the control model 86. In a case where the model 80 is an inverter device, for example, when a time-series control value that causes time-series motor torque to be generated is input to the control model 86, the control model 86 controls a switching timing of each element model 88 to generate this time-series motor torque. In this case, a power is supplied from the power supply model.

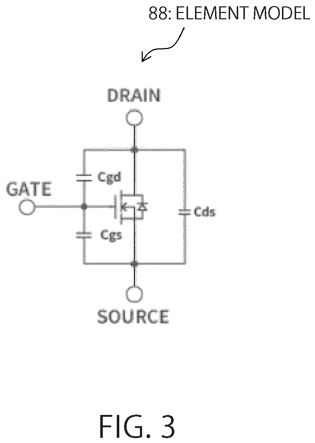

FIG. 3 is a diagram illustrating an example of the element model 88. As illustrated in FIG. 3, the element model 88 is, for example, a model of a MOSFET that is an active element. In a case where the element model 88 is, for example, a model of a MOSFET that is an active element, information for computing a transient response of the MOSFET, such as capacitances Cgs and Cgd of an oxide film, a junction capacitance Cds of a built-in diode, information on a switching time, and a threshold voltage VGS (th), is defined as the electrical characteristics.

The element model 88 also includes a resistive element and a capacitive element (a capacitor) that are passive elements, a passive element (a coil) that stores energy in a magnetic field, and the like, in addition to the active element. Information on these passive elements is defined as a resistance value, a capacitance value, and an inductance.

Here, details of an instruction operation of the information input portion 10 are described with reference to FIGS. 4 to 6.

FIG. 4 is a diagram illustrating an example in which the selectable models 80 are displayed on a monitor 700 of the display 70.

The output portion 50 of the arithmetic device 1 causes the monitor 700 of the display 70 to display the models 80 of which electrical characteristics have already been defined, before start of simulation. An operator selects the model 80 for which simulation is to be performed, via the information input portion 10. The model creator 30 acquires information on the selected model 80 from the storage 20 and creates the model 80. Accordingly, the operator can easily configure a model of an entire device for which simulation is to be performed.

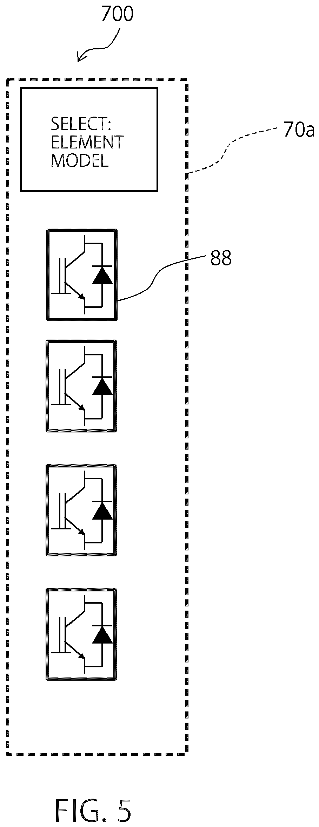

FIG. 5 is a diagram illustrating an example in which the element models 88 that are selectable for the selected model 80 are displayed on the monitor 700. The selectable element models 88 are displayed in a frame 70a.

The output portion 50 causes the monitor 700 of the display 70 to display the element models 88 of which electrical characteristics have already been defined, before start of simulation. An operator selects the element model 88 for which simulation is to be performed, via the information input portion 10. First, the operator specifies the element model 88 in the model 80 illustrated in FIG. 2, for example. Subsequently, the operator specifies the element model 88 displayed on the monitor 700, via the information input portion 10. Therefore, the element model 88 can be replaced.

Before selecting the element model illustrated in FIG. 5, the operator can cause the monitor 700 to display the electrical characteristics of each element by placing a marker, whose position is operable via the information input portion 10, on the element model 88 corresponding to that element. In a case where the element model is a MOSFET, for example, capacitances Cgs and Cgd of an oxide film, a junction capacitance Cds of a built-in diode, information on a switching time, a threshold voltage VGS (th), and the like that have been set are displayed on the monitor 700.

Further, the operator can also register information on the electrical characteristics of the newly designed element model 88 in the element model database 20b. Accordingly, the output portion 50 can cause the monitor 700 of the display 70 to display the newly designed element model 88 as the selectable element model 88. Therefore, the operator can also select the newly designed element model 88, so that it is possible to simulate the electrical and temperature characteristics of the newly designed element model 88 by a simpler operation.

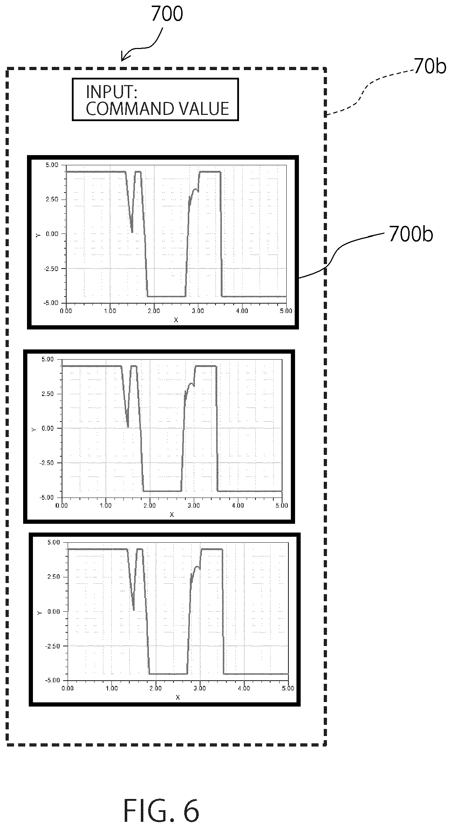

FIG. 6 is a diagram illustrating examples of command values selectable for the selected model 80. A plurality of selectable command values 700b are displayed in a frame 70b.

The output portion 50 causes the monitor 700 of the display 70 to display the selectable command values 700b before start of simulation. An operator selects the command value 700b for which simulation is to be performed, via the information input portion 10.

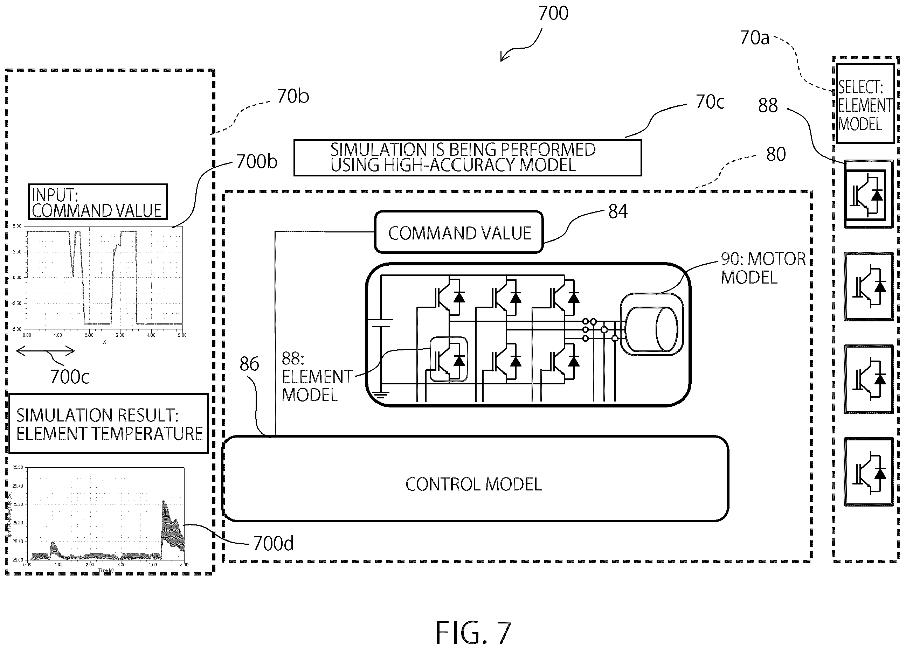

FIG. 7 is a diagram illustrating an image example to be displayed on the monitor 700 during simulation. When the model 80 and the like are selected in the above-described manner, an image illustrated in FIG. 7, for example, is displayed on the monitor 700.

A frame 70c is a frame for indicating an example of an element model for which simulation is being performed. As described above, there are a plurality of types of the element models 88, which include a high-accuracy model (a detailed model), a thermal model (an operation model), and a simple model, and it is possible to easily determine the type of simulation by clearly indicating the type of model used. The high-accuracy model is a model that computes a transient phenomenon in accordance with prescribed electrical characteristics. The high-accuracy model is used for simulation of normal electrical characteristics. The thermal model is obtained by modeling the state of heat generation and is used for simulation of temperature characteristics. The simple model is a model obtained by simplifying the high-accuracy model, which is used for simulation of characteristics of a mechanical model described later. The simple model is, for example, a switch model having information on a resistance value of an element.

An input command value and a simulation result are displayed in the frame 70b. In a case where the model 80 is an inverter device, the command value 700b is a control command value that causes a motor torque to be generated. The horizontal axis represents a time and the vertical axis represents a control command value. An arrow 700c indicates a first period in which a high-accuracy model is used as the element model 88.

The simulation result is a temperature change for each element model 88, for example. The horizontal axis represents a time and the vertical axis represents a temperature. Simulation using the high-accuracy model is performed in order to obtain information for creating a thermal model (an operation model).

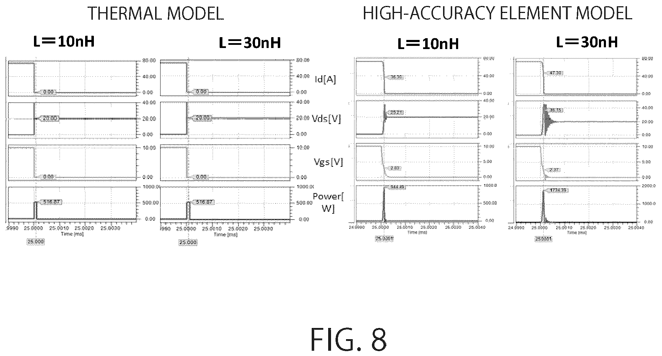

Referring back to FIG. 1 again, details of the thermal-model creator 60 are described referring also to FIG. 8. In FIG. 8, the right half of the drawing illustrates a simulation result of power generation at a time of switching in a high-accuracy model. The left half of the drawing illustrates a simulation result of power generation at the time of switching in a thermal model. FIG. 8 illustrates a case where a reactance connected to the element model 88 is 10 nH and a case where the reactance is 30 nH.

A drain current Id, a drain-source voltage Vds, a gate-source voltage Vgs, and a generated power Power, which are predetermined inputs to the element model 88, are illustrated from above. The horizontal axis represents a time, and the vertical axis represents a drain current Id, a drain-source voltage Vds, a gate-source voltage Vgs, or a generated power Power.

The state of power generation by each element model 88 changes depending on a combination of the element models 88, a combination of passive elements, resistors, capacitors, and coils, and the like. Therefore, in order to analyze the state of power generation, it is necessary to strictly simulate a transient phenomenon. For this reason, a high-accuracy model is used.

Meanwhile, the shape of a temporal change of the generated power Power tends not to change. As illustrated in FIG. 8, the temporal change of the generated power Power has a spike shape in accordance with a switching timing, for example. This spike shape is maintained even when the magnitude of the drain current Id, the drain-source voltage Vds, or the gate-source voltage Vgs is changed. That is, when the magnitude of the drain current Id, the drain-source voltage Vds, or the gate-source voltage Vgs is changed, the height of the spike changes depending on the magnitude of the drain current Id, the drain-source voltage Vds, or the gate-source voltage Vgs while the spike shape is maintained to a similar shape.

The temperature of the element model 88 changes in accordance with an integrated value of the generated power Power. Therefore, simulation of the temperature characteristics of an active element such as a MOSFET is performed by computing the generated power Power generated in accordance with a switching timing.

Meanwhile, a time constant of a temperature change is larger than a time constant of an active element. Therefore, in simulation of the temperature characteristics, there is a tendency that the temperature characteristics depend on the integrated value of the spike shape but do not depend on the shape. Focusing on such characteristics, the thermal-model creator 60 according to the present embodiment creates a thermal model corresponding to a generated power of a high-accuracy model.

First, the spike shape is strictly simulated by a high-accuracy model of the element model 88. Next, the thermal-model creator 60 computes an integrated value of a spike shape part and determines a representative value that is proportional to the integrated value. For example, a value obtained by dividing the integrated value by a predetermined time is computed as the representative value. Alternatively, the integrated value itself is used as the representative value.

As described above, the lowermost diagram of the left half of FIG. 8 illustrates an output example of an integrated power of the thermal model. In the thermal model, a power value having a quadrangular area is output as an output value in accordance with a switching timing in this manner. The height of this quadrangle is linearly computed depending on the drain current Id, the drain-source voltage Vds, or the gate-source voltage Vgs. For example, the height of this quadrangle is computed to be linearly proportional to the drain current Id, the drain-source voltage Vds, or the gate-source voltage Vgs. In the thermal model, an output value that is in accordance with the drain current Id, the drain-source voltage Vds, or the gate-source voltage Vgs is output by linear computation using the representative value in this manner. In other words, in the thermal model, an input-output relation is digitized and processed. Accordingly, in simulation of the temperature characteristics, it is possible to output an integrated value of the generated power Power equivalent to that in a high-accuracy model at a higher speed in accordance with the drain current Id, the drain-source voltage Vds, or the gate-source voltage Vgs, in place of strict simulation of an active element. Since the integrated value of the generated power Power which is the same as that in the high-accuracy model is digitally output by linear computation that is in accordance with a predetermined input value in this manner, a calculation load of a computer is reduced and a calculation speed of the computer is further increased.

Further, in temperature simulation, a passive element generates heat that is proportional to the square of a current. Therefore, for the passive element, a normal element model is used also in the temperature simulation.

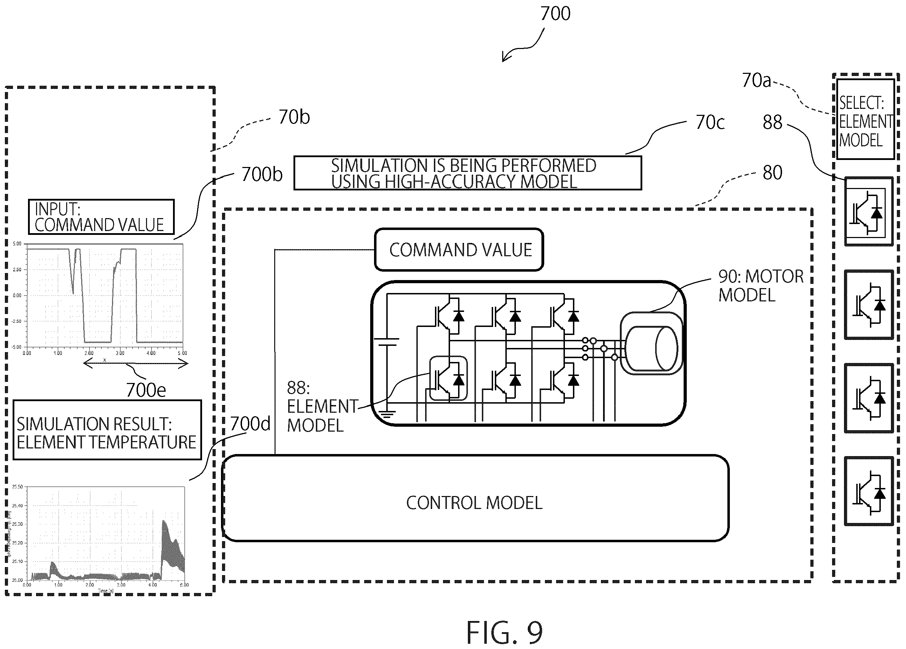

FIG. 9 is a diagram illustrating an image example to be displayed on the monitor 700 during simulation by a thermal model. The thermal-model creator 60 creates a thermal model at a timing at which simulation of the temperature characteristics is started and the result of strict simulation by a high-accuracy model is accumulated in the output portion 50. Next, the thermal-model creator 60 replaces the element model 88 that is the high-accuracy model with the thermal model. After replacement with the thermal model, display in the frame 70c is changed to a display indicating that the thermal model is being used. An arrow 700e indicates a second period in which the thermal model is used. The second period 700e is set to be longer than the first period 700c. Accordingly, a time of computation is made shorter as compared with a case where computation is performed by the high-accuracy model in the second period.

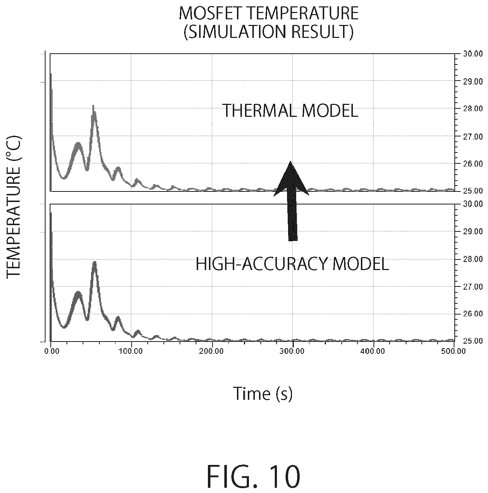

FIG. 10 is a diagram illustrating an example in which simulation using a thermal model and simulation using a high-accuracy model are displayed for comparison. The horizontal axis represents a time and the vertical axis represents a temperature of an element model. As described above, also in a case where the thermal model is used, it is possible to obtain a simulation result equivalent to that obtained in a case where the high-accuracy model is used. Accordingly, although simulation of the temperature characteristics using the high-accuracy model requires a computer load of the order of 10 hours, use of the thermal model enables an identical result by computation with a computer load of the order of several minutes.

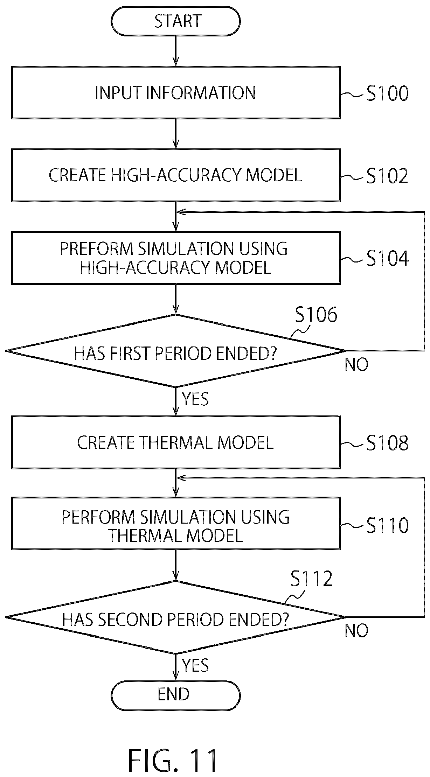

FIG. 11 is a flowchart illustrating a computation example by the arithmetic device 1. First, an operator inputs information on a high-accuracy model for which temperature simulation is performed, via the information input portion 10, as illustrated in FIG. 11 (Step S100).

Next, the model creator 30 creates a model that uses the high-accuracy model as the element model 88 based on the input information (Step S102).

Next, the execution processor 40 computes a transient response for each calculation step by using the high-accuracy model in accordance with a time-series command value that has been set (Step S104).

Next, the execution processor 40 determines whether the set first period has ended (Step S106). When the first period has not ended (NO at Step S106), the processes from Step S104 are repeated.

Meanwhile, when determining that the first period has ended (YES at Step S106), the execution processor 40 outputs data accumulated in the output portion 50 to the thermal-model creator 60, and the thermal-model creator 60 creates a thermal model (Step S108). Subsequently, the thermal-model creator 60 replaces the high-accuracy model with the thermal model.

Next, the execution processor 40 computes a temperature response for each calculation step by using the thermal model in accordance with the remaining time-series command values that have been set (Step S110).

Next, the execution processor 40 determines whether the set second period has ended (Step S112). When the second period has not ended (NO at Step S112), the processes from Step S112 are repeated.

Meanwhile, when determining that the second period has ended (YES at Step S106), the execution processor 40 causes the output portion 50 to create a display format that indicates a temporal change of the temperature for each element model 88, causes the display 70 to display the display format, and thereafter ends the overall process.

As described above, according to the present embodiment, the execution processor 40 computes a power generated in each time step by switching of the element model 88 with respect to input values (a driving voltage value and a driving current value) in chronical order by using information on the electrical characteristics of the element model 88. The thermal-model creator 60 then creates a thermal model that outputs a generated power generated by switching of the element model 88 in accordance with the predetermined input values (the driving voltage value and the driving current value), based on an integrated value obtained by integrating the power generated in each time step.

Since the integrated value of the generated power in a high-accuracy model of the element model 88 is linearly changed in accordance with the input values, the thermal model can linearly compute the generated power generated by switching of the element model 88 in accordance with the input values. Accordingly, since the thermal model digitally outputs the integrated value of the generated power Power which is the same as that in the high-accuracy model by linear computation that is in accordance with predetermined input values, a calculation load of a computer is reduced and a calculation speed of the computer is further increased.

### (Second embodiment)

The arithmetic device 1 according to a second embodiment is different from the arithmetic device 1 according to the first embodiment in that the model creator 30 can create a mechanical model that performs a mechanical operation. Differences between the arithmetic device 1 according to the second embodiment and the arithmetic device 1 according to the first embodiment are described below.

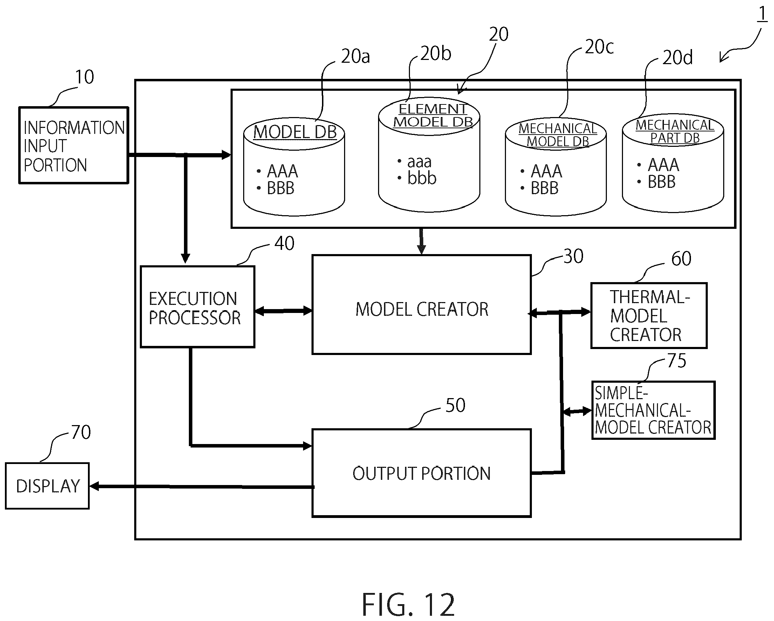

FIG. 12 is a block diagram illustrating a configuration of the arithmetic device 1 according to the second embodiment. As illustrated in FIG. 12, the arithmetic device 1 according to the present embodiment can create a mechanical model. More specifically, the storage 20 further includes a mechanical model database 20c and a mechanical part database 20d. Although each portion according to the present embodiment is configured by execution of programs stored in the storage 20, the manner of configuring each portion is not limited thereto. For example, a simple-mechanical-model creator 75 described later may be further configured by a circuit.

The element model database 20b further stores therein a simple model that is obtained by simplifying the element model 88.

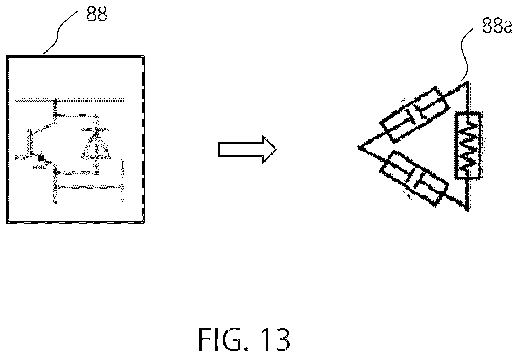

FIG. 13 is a diagram illustrating an example of a simple model 88a obtained by simplifying the element model 88. A MOSFET that is an example of an active element, and the like can be represented by a combination of passive elements when being approximated by a larger time constant. Therefore, the simple model 88a can be configured by a switch model having information on a resistance value of an element, as described above.

The mechanical model database 20c stores therein information on a plurality of mechanical models (detailed models) 92. The mechanical part database 20d stores therein information on mechanical parts in the mechanical model 92. Accordingly, the model creator 30 can create the mechanical model 92 that operates in cooperation with the circuit model (a simple model) 82, for example, in accordance with input from the information input portion 10. Further, the model creator 30 can replace a mechanical part 94 in the mechanical model 92 in accordance with input from the information input portion 10. The mechanical part 94 is, for example, a gear, a steering wheel, or a tire.

The simple-mechanical-model creator 75 creates an operation model related to the mechanical model 92. For example, a time-series motor torque 700g of the motor model 90 described later and a command value 700b that causes the motor torque 700g to be generated are operation models related to the mechanical model 92. Time constants of the circuit model 82 and the mechanical model 92 are largely different from each other and, when a high-accuracy model of the circuit model 82 is used for simulation of the mechanical model 92, an unrealistic calculation time is taken. Therefore, in a case of simulation of the mechanical model 92, the simple model 88a is used. Meanwhile, in a case of simulation of the circuit model 82, simulation is performed while the mechanical model 92 is separated by using simple mechanical models (operation models) that simply represent an operation of the mechanical model 92, for example, the time-series motor torque 700g and the command value 700b that causes the motor torque 700g to be generated.

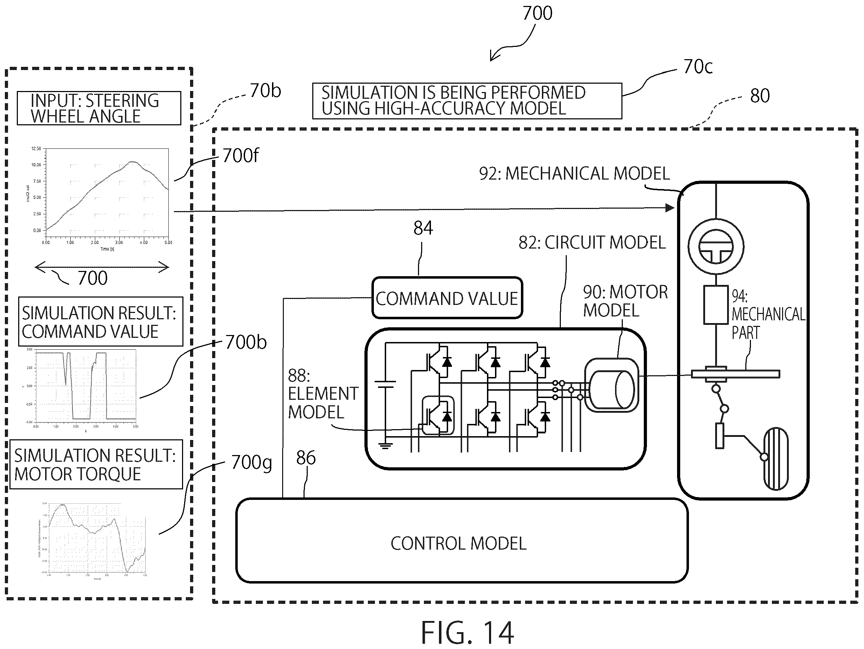

FIG. 14 is a diagram illustrating an image example of the model 80 including the mechanical model 92, which is to be displayed on the monitor 700 during simulation. As described above, the frame 70c is a frame for indicating an example of an element model for which simulation is being performed, and indicates that a simple model is being used. That is, an operation of the mechanical model 92 is being simulated. The length of a calculation step of simulation of the operation of the mechanical model 92 is set to be, for example, about 100 times longer than the length of a calculation step of simulation of the circuit model 82.

As illustrated in FIG. 14, the mechanical model 92 is, for example, a model of a steering-wheel auxiliary drive device of an automobile driven by the circuit model 82 of an inverter device.

In FIG. 14, an input command value to the model 80 is an angle 700f of a steering wheel of the automobile, which is a time-series value. A time constant of a response time of the mechanical model 92 is considerably larger than a time constant of the circuit model 82. Therefore, the element model 88 used in computation of the mechanical model 92 is changed to a simple model, as described above. Accordingly, faster computation can be achieved.

That is, the mechanical model 92 uses the time-series angle 700f of the steering wheel of the automobile as its input, and outputs the time-series motor torque 700g of the motor model 90, which is required for driving the steering wheel in an auxiliary manner, and the command value 700b that causes the motor torque 700g to be generated as a simulation result.

The simple-mechanical-model creator 75 approximates the motor torque 700g and the command value 700b by a spline model or the like. Accordingly, the motor torque 700g and the command value 700b corresponding to the calculation step of the circuit model 82, which is about 1/100 times shorter than the calculation step of the mechanical model 92, are created as operation models.

Next, the execution processor 40 performs temperature simulation that is identical to that in the first embodiment by using the command value 700b and the motor torque 700g created by the simple-mechanical-model creator 75.

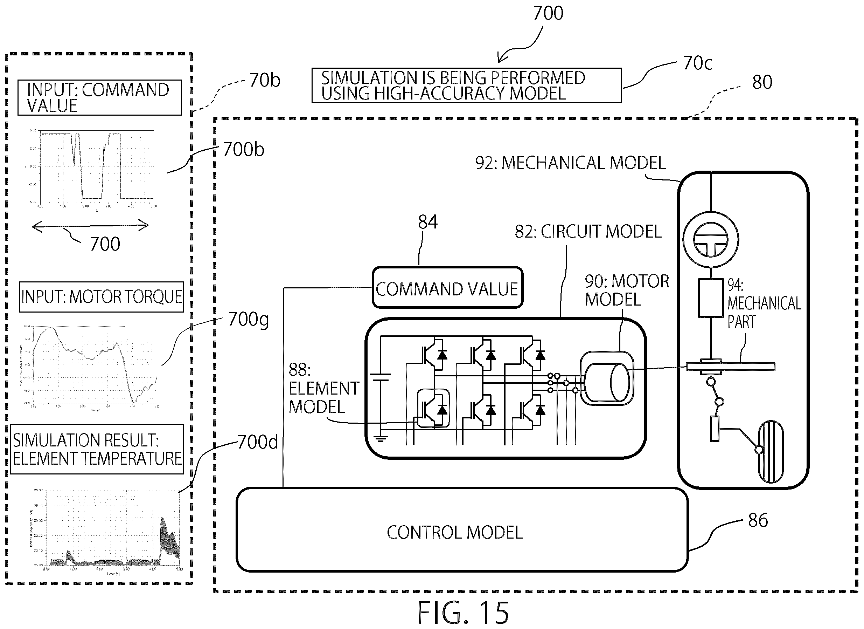

FIG. 15 is a diagram illustrating an image example of the model 80 including the mechanical model 92, which is to be displayed on the monitor 700 during simulation of the temperature of the circuit model 82. As described above, the frame 70c is a frame for indicating an example of an element model for which simulation is being performed, and indicates that a thermal model is being used. That is, the temperature of the circuit model 82 is being simulated.

Since the lengths of the calculation steps of the circuit model 82 and the mechanical model 92 are different from each other, the mechanical model 92 is separated, for example, during the temperature simulation of the circuit model 82. Therefore, the motor torque 700g is used as a motor torque of the motor model 90 that operates in cooperation with the mechanical model 92.

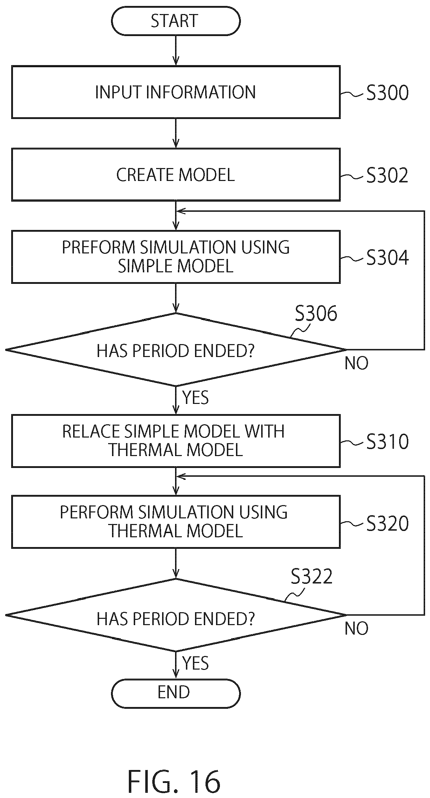

FIG. 16 is a flowchart illustrating an example of temperature simulation of the circuit model 82 that operates in cooperation with the mechanical model 92. First, an operator inputs information on the mechanical model 92 and the circuit model 82 for which temperature simulation is performed, via the information input portion 10, as illustrated in FIG. 16 (Step S300).

Next, the model creator 30 creates the model 80 that uses a simple model as the element model 88 based on the input information (Step S302).

Next, the execution processor 40 outputs the motor torque 700g and the command value 700b for each first calculation step to the output portion 50 by using the simple model in accordance with a time-series command value that has been set, and causes them to be stored (Step S304).

Next, the execution processor 40 determines whether a set period has ended (Step S306). When the period has not ended (NO at Step S306), the processes from Step S304 are repeated.

Meanwhile, when determining that the period has ended (YES at Step S306), the execution processor 40 outputs accumulated data from the output portion 50 to the simple-mechanical-model creator 75, and the simple-mechanical-model creator 75 creates the motor torque 700g and the command value 700b for each second calculation step (Step S108). The second calculation step is, for example, one hundredth of the time of the first calculation step. Subsequently, the thermal-model creator 60 replaces the simple model with a thermal model (Step S310).

Next, the execution processor 40 computes a temperature response for each calculation step by using the thermal model in accordance with the time-series command value 700b and the time-series motor torque 700g that have been set (Step S320).

Next, the execution processor 40 determines whether the set second period has ended (Step S322). When the second period has not ended (NO at Step S322), the processes from Step S320 are repeated.

Meanwhile, when determining that the second period has ended (YES at Step S322), the execution processor 40 causes the output portion 50 to create a display format that indicates a temporal change of the temperature for each element model 88, causes the display 70 to display the display format, and thereafter ends the overall process.

As described above, according to the present embodiment, first, an operation of the mechanical model 92 is simulated by using a simple model of the circuit model 82 in the first calculation step, and the time-series command value 700b and the time-series motor torque 700g output from the mechanical model 92 to the control model 86 are stored. Subsequently, the simple-mechanical-model creator 75 is caused to create the time-series command value 700b and the time-series motor torque 700g to correspond to the second calculation step. Temperature simulation of the circuit model 82 is then performed in the second calculation step by using the time-series command value 700b and the time-series motor torque 700g that correspond to the second calculation step. Accordingly, it is possible to compute temperature simulation of the circuit model 82 that cooperates with the mechanical model 92 in which the order of the calculation step is different by about 100 times, in a shorter time.

### (Third embodiment)

The arithmetic device 1 according to a third embodiment is different from the arithmetic device 1 according to the second embodiment in that the model creator 30 further has a function of automatically creating an operation model from a plurality of models. Differences between the arithmetic device 1 according to the third embodiment and the arithmetic device 1 according to the first embodiment are described below.

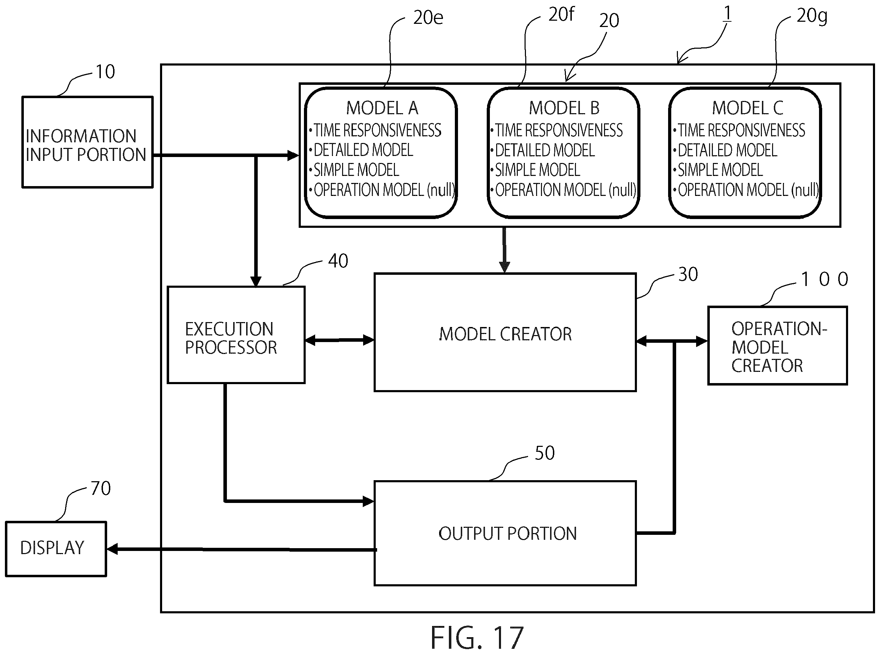

FIG. 17 is a block diagram illustrating a configuration of the arithmetic device 1 according to the third embodiment. As illustrated in FIG. 17, the arithmetic device 1 according to the present embodiment includes an operation-model creator 100 that can automatically create an operation model by using a plurality of models. While each portion according to the present embodiment is configured by execution of programs stored in the storage 20, the manner of configuring each portion is not limited thereto. For example, the operation-model creator 100 may be further configured by a circuit.

The storage 20 includes, for example, a plurality of models 20e to 20g. The models 20e to 20g are physical models, and each have information on the time responsiveness, a detailed model, and a simple model. That is, an operation model has not been created in an initial state.

The operation-model creator 100 creates an operation model according to the purpose by using the detailed models and the simple models of the models 20e to 20g.

As described above, the detailed model according to the present embodiment is a model in which the physical characteristics of each part are defined, and can also compute a transient response, for example. The simple model is a model obtained by simplifying the detailed model and is, for example, a model obtained by averaging the response characteristics of the detailed model at a longer time interval. The operation model is, for example, a model corresponding to a specific physical phenomenon, obtained by averaging the response characteristics of the detailed model at a time interval that is longer than that of the detailed model and is shorter than that of the simple model.

For example, the model 20e is a circuit model. The detailed model of the model 20e is a circuit model in which a plurality of element models each having information on the electrical characteristics of a switching element are connected to each other. This detailed model can also compute a transient response of a switching element, for example. The simple model of the model 20e is, for example, a model that is obtained by averaging the electrical characteristics of the switching element in the element model at a longer time interval and that represents those electrical characteristics by the resistance characteristics. The operation model of the model 20e is, for example, a thermal model that outputs heat in accordance with switching of the element model. However, the thermal model is in a "null" state and has not been generated in an initial state, as described above.

The time responsiveness of the detailed model of the model 20e is, for example, 100 nanoseconds, and the time responsiveness of the detailed model of the model 20f is, for example, 0.1 second, and they are different from each other by several digits. Similarly, the time responsiveness of the detailed model of the model 20g is different from the time responsiveness of the detailed model of the model 20f by several digits and is larger.

As described above, when a physical model is created by coupling the detailed models with different time orders as described above to each other, the detailed model having the shorter time responsiveness becomes a rate-determining model for a simulation time, and the simulation time becomes unrealistic. Accordingly, first, the execution processor 40 according to the present embodiment combines a detailed model and a simple model with each other in accordance with the time responsiveness of detailed models to create a target operation model.

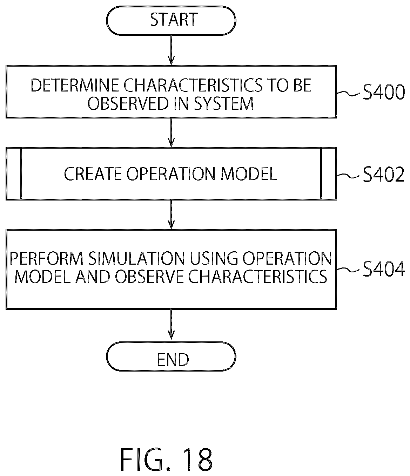

FIG. 18 is a flowchart illustrating an operation example of the execution processor 40. First, the execution processor 40 determines characteristics to be observed in a system, as illustrated in FIG. 18 (Step S400). The characteristics to be observed are, for example, the thermal characteristics of a circuit that drives a motor.

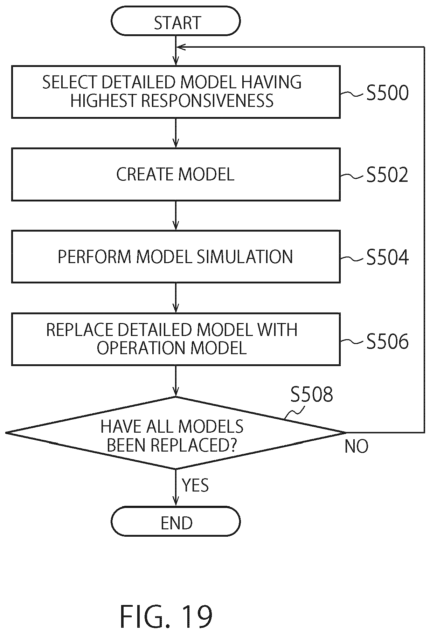

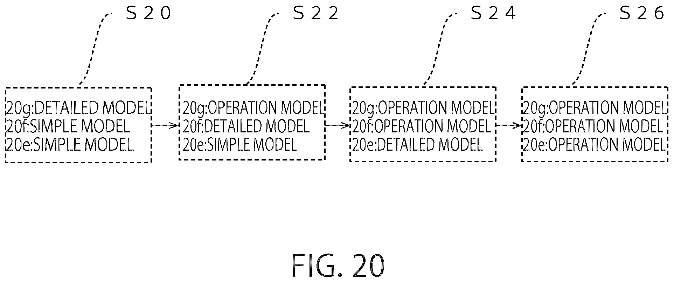

Next, the operation-model creator 100 creates an operation model corresponding to the characteristics to be observed in order to enable observation for a longer time (Step S402). At the step of creating the operation model, the operation-model creator 100 creates the operation model in accordance with response times of a plurality of detailed models. Details of the step of creating the operation model are described later with reference to FIGS. 19 and 20.

Next, the characteristics to be observed are computed by simulation using the created operation model (Step S404). By creating an operation model in accordance with the characteristics to be observed and performing more efficient simulation in this manner, it is possible to obtain a simulation result in accordance with the characteristics to be observed in a shorter time.

FIG. 19 is a flowchart of a detailed processing example at Step S402 in FIG. 18. FIG. 20 is a diagram schematically illustrating the processing example in FIG. 19 in chronical order.

As illustrated in FIG. 19, the execution processor 40 selects a detailed model having the highest responsiveness from the models 20e to 20g that have no operation model (Step S500). That is, a detailed model of the model 20g is selected as illustrated at S20 in FIG. 20.

Next, the model creator 30 creates a first physical model using the detailed model of the model 20g and the simple models of the models 20e and 20f, as illustrated at S20 in FIG. 20 (Step S502). Here, as for the remaining models 20e and 20f that have no operation model, the simple models are used.

Next, the execution processor 40 performs model simulation that uses the first physical model to create data for creating an operation model of the model 20g (Step S504). Subsequently, the operation-model creator 100 creates the operation model of the model 20g by using the data obtained at Step S504.

The model creator 30 then replaces the detailed model of the model 20g with the operation model as illustrated at S22 in FIG. 20 (Step S506).

Next, the execution processor 40 determines whether all models have been replaced with the operation models (Step S508). When all the models have not been replaced with the operation models (NO at Step S508), the processes from Step S500 are repeated. Accordingly, as illustrated at S24 and S26 in FIG. 20, the detailed models are replaced with the operation models in turn. Meanwhile, when all the models have been replaced with the operation models (YES at Step S508), the process is ended.

As described above, according to the present embodiment, a detailed model and a simple model are combined with each other in accordance with the time responsiveness of detailed models to create a target operation model, and simulation in accordance with the characteristics to be observed is performed after all operation models are created. Accordingly, it is possible to perform more efficient simulation, so that it is possible to obtain a simulation result in accordance with the characteristics to be observed in a shorter time.

### (Fourth embodiment)

The arithmetic device 1 according to a fourth embodiment is different from the arithmetic device 1 according to the second embodiment in that the model creator 30 further has a function of automatically creating an operation model from a FET model and a mechanical model. Differences between the arithmetic device 1 according to the fourth embodiment and the arithmetic device 1 according to the second embodiment are described below.

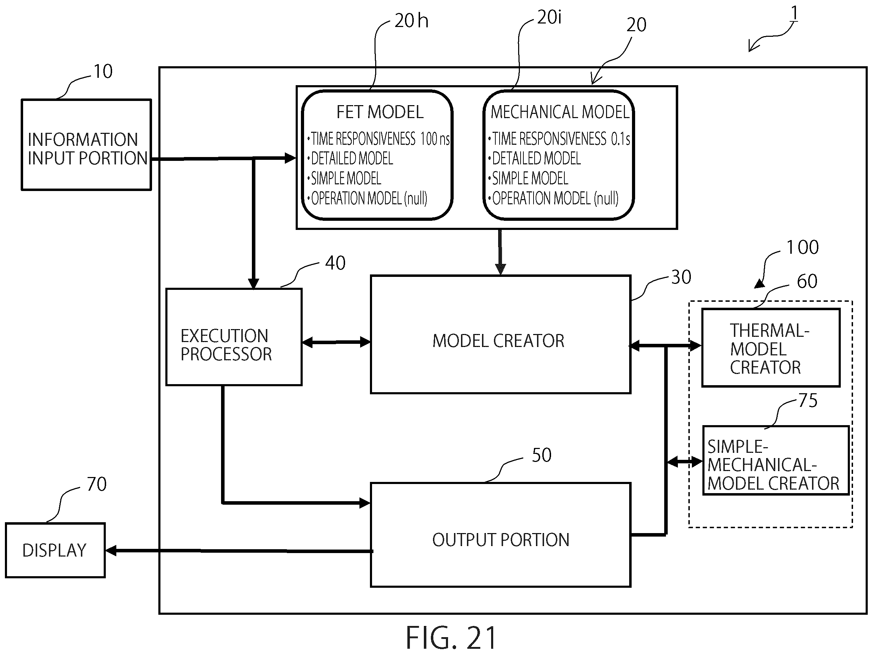

FIG. 21 is a block diagram illustrating a configuration of the arithmetic device 1 according to the fourth embodiment. As illustrated in FIG. 21, the arithmetic device 1 according to the present embodiment includes the operation-model creator 100 that can automatically create an operation model by using a FET model 20h and a mechanical model 20i. The operation-model creator 100 includes the thermal-model creator 60 and the simple-mechanical-model creator 75.

The storage 20 includes, for example, the FET model 20h and the mechanical model 20i. The FET model 20h and the mechanical model 20i are physical models and each have information on the time responsiveness, a detailed model, and a simple model. That is, an operation model has not been created in an initial state.

The operation-model creator 100 creates an operation model according to the purpose by using the detailed models and the simple models of the FET model 20h and the mechanical model 20i. The detailed model of the FET model 20h has, for example, information on a relation of connection between a resistive element, a capacitive element (a capacitor), a passive element (a coil) that stores energy in a magnetic field, and a switching element (for example, a MOSFET) that is an active element, and information on the electrical characteristics of each element. For example, the detailed model has capacitances Cgs and Cgd of an oxide film, a junction capacitance Cds of a built-in diode, information on a switching time, information on a threshold voltage VGS (th), and the like that have been set in a switching element. The simple model of the FET model 20h is, for example, a switch model having information on a resistance value of an element.

The detailed model of the mechanical model 20i is a model that performs a mechanical operation. The detailed model of the mechanical model 20i is a combination of mechanical parts, for example, a gear, a steering wheel, and a tire. For the mechanical parts, the operation characteristics are defined. The simple model of the mechanical model 20i is a model obtained by simplifying an operation of each mechanical part and indicates, for example, the average input-output characteristics at longer calculation steps than those of the detailed model.

The operation model of the FET model 20h is, for example, a thermal model that outputs heat in accordance with switching of an element model. However, the thermal model is in a "null" state and has not been created in an initial state. Similarly, the operation model of the mechanical model 20i is, for example, a model indicating a relation between a motor torque and the command value 700b corresponding to a calculation step of the FET model 20h. The operation model of the mechanical model 20i is in a "null" state and has not been created in an initial state.

The time responsiveness of the detailed model of the FET model 20h is, for example, 100 nanoseconds, and the time responsiveness of the detailed model of the mechanical model 20i is, for example, 0.1 second. As described above, the time responsiveness of the detailed model of the FET model 20h and the time responsiveness of the detailed model of the mechanical model 20i are different from each other by several digits.

When a physical model is created by coupling detailed models with different time orders to each other, the detailed model having the shorter time responsiveness becomes a rate-determining model for a simulation time, and the simulation time becomes unrealistic. Accordingly, first, the execution processor 40 according to the present embodiment combines a detailed model and a simple model with each other in accordance with the time responsiveness of the detailed models of the FET model 20h and the mechanical model 20i to create a target operation model.

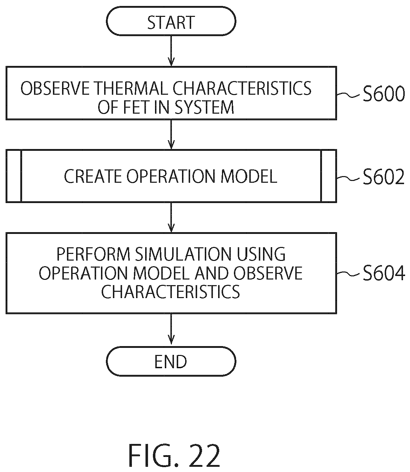

FIG. 22 is a flowchart illustrating an operation example of the execution processor 40. First, the execution processor 40 determines characteristics to be observed in a system as illustrated in FIG. 22 (Step S600). The characteristics to be observed are, for example, the thermal characteristics of an FET that drives a motor.

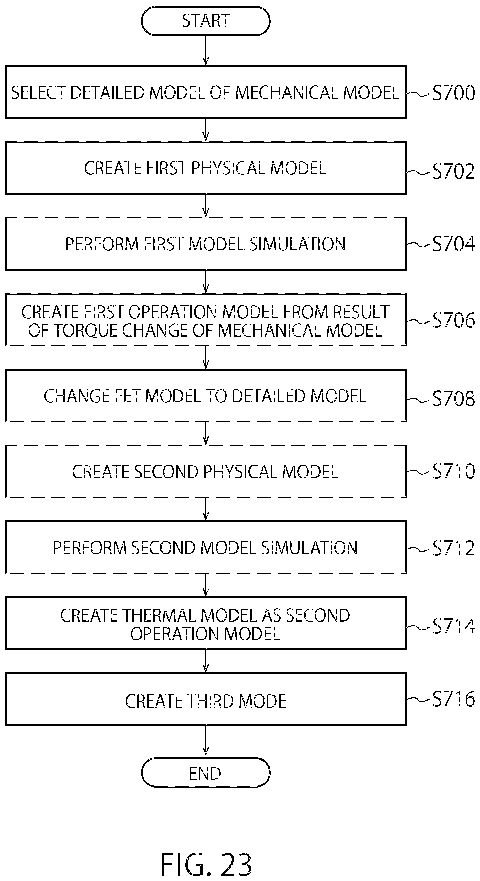

Next, the operation-model creator 100 creates an operation model corresponding to the characteristics to be observed in order to enable observation for a longer time (Step S602). At the step of creating the operation model, the operation-model creator 100 creates the operation model in accordance with response times of a plurality of detailed models. Details of the step of creating the operation model are described later with reference to FIG. 23.

Next, the characteristics to be observed are computed by simulation using the created operation model (Step S604). By creating an operation model in accordance with the characteristics to be observed and performing more efficient simulation in this manner, it is possible to obtain a simulation result in accordance with the characteristics to be observed in a shorter time.

FIG. 23 is a flowchart illustrating a detailed processing example at Step S602 in FIG. 22. As illustrated in FIG. 23, the execution processor 40 selects a detailed model having the highest responsiveness from detailed models of the FET model 20h and the mechanical model 20i that have no operation model (Step S700). That is, the detailed model of the mechanical model 20i is selected.

Next, the model creator 30 creates a first physical model using the detailed model of the mechanical model 20i and the simple model of the FET model 20h (Step S702).

Next, the execution processor 40 performs model simulation that uses the first physical model to create data for creating an operation model of the mechanical model 20i (Step S704). Subsequently, the simple-mechanical-model creator 75 of the operation-model creator 100 creates an operation model of the mechanical model 20i as a first operation model by using the data obtained at Step S704 (Step S706).

The model creator 30 then replaces the simple model of the FET model 20h with the detailed model (Step S708). The model creator 30 further replaces the detailed model of the mechanical model 20i with the first operation model, and creates a second physical model (Step S710).

Next, the execution processor 40 performs model simulation that uses the second physical model to create data for creating an operation model of the FET model 20h (Step S712). Subsequently, the thermal-model creator 60 of the operation-model creator 100 creates a thermal model of the FET model 20h as a second operation model by using the data obtained at Step S712 (Step S714).

The model creator 30 then replaces the detailed model of the FET model 20h with the second operation model, creates a third physical model (Step S716), and ends the process.

As described above, according to the present embodiment, a detailed model and a simple model are combined with each other in accordance with the time responsiveness of detailed models of the FET model 20h and the mechanical model 20i to create a target operation model, and simulation in accordance with the thermal characteristics of the FET model 20h to be observed is performed after all operation models are created. Accordingly, by performing more efficient simulation, it is possible to obtain a simulation result in accordance with the thermal characteristics of the FET model 20h to be observed in a shorter time.

At least a part of the arithmetic device 1 described in the above embodiments can be constituted by hardware or software. When it is constituted by software, it is possible to configure that a program for realizing at least a part of the functions of the arithmetic device 1 is stored in a recording medium such as a flexible disk or a CD-ROM, and the program is read and executed by a computer. The recording medium is not limited to a detachable device such as a magnetic disk or an optical disk, and can be a fixed recording medium such as a hard disk device or a memory.

Further, the program for realizing at least a part of the functions of the arithmetic device 1 can be distributed via a communication line (including wireless communication) such as the Internet. Furthermore, the program can be distributed in an encrypted, modulated, or compressed state via a wired line or a wireless line such as the Internet, or the program can be distributed as it is stored in a recording medium.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An arithmetic method of computing an operation model based on a detailed model, comprising:
a model creation step (S102, S502) of creating a simulation model based on the detailed model; and
an operation model creation step (S108, S310, S402) of creating an operation model that is longer than the detailed model corresponding thereto in an interval of calculation steps by simulating physical characteristics to be observed based on the simulation model.

2. The method according to claim 1, wherein
the model creation step (S102) creates a circuit model (82) in which a plurality of element models (88) each having information on electrical characteristics of a switching element are connected to each other,
the simulation is an execution processing step (S104, S110, S304, S320) of computing, by using information on electrical characteristics of each of the element models (88), a power generated at each time step by switching of the element model (88) with respect to a predetermined time-series input value in time series, and
the operation model creation step (S108, S310, S402) is a thermal model creation step (S108, S310) of creating a thermal model that outputs an output value based on an integrated value obtained by integrating the power generated at the each time step, in accordance with switching of the element model (88).

3. The method according to claim 2, wherein the thermal model creation step (S108, S310)uses a value obtained by dividing the integrated value by a predetermined time or the integrated value as a representative value, and outputs the output value based on the representative value.

4. The method according to claim 3, wherein the thermal model outputs the output value by linear computation in accordance with the predetermined input value, using the representative value.

5. The method according to claim 2, wherein the execution processing step (S104,S110) computes a power generated at each time step in time series in accordance with a time-series command value for a first period by using information on electrical characteristics of each of the element models, and
computes a power generated at each time step of the element model in time series in accordance with a time-series command value for a second period longer than the first period, by using the thermal model.

6. The method according to claim 4, wherein the execution processing step (S110, S320) uses power generated by using the thermal model to compute a temperature at the each time step of the element model in time series.

7. The method according to any one of claims 2 to 6, further comprising an output step of creating a display format (700d) that indicates a temporal change of a temperature generated in the element model (88).

8. The method according to claim 1, wherein the circuit model (82) is selectable from a plurality of different circuit models.

9. The method according to any one of claims 2 to 7, wherein the element model (88) is selectable from a plurality of different element models.

10. The method according to claim 1, wherein
the circuit model (82) further has information on a motor model (90), and
the model creation step (S302) creates a mechanical model (92) of a mechanical structure driven by the motor model (90).

11. The method according to claim 10, wherein, when the mechanical model (82) is included, the execution processing step (S304) computes an operation of the mechanical model in accordance with a time-series command value for the mechanical model at each second time step longer than the time step.

12. The method according to claim 11, wherein
the command value of the circuit model (82) is a torque command value that instructs a torque output of the motor model (90) output from the mechanical model (92), and a motor torque of the motor model (90), and
when computing the torque command value and the motor torque, the execution processing step (S304) replaces electrical characteristics of a switching element in the element model (88) with a simple model (88a) represented by resistance characteristics and performs computation.

13. The method according to claim 12, wherein, when computing a temperature of the element model (88) during driving of the mechanical model (92), the execution processing step (S320) computes a temperature at the each time step by using the torque command value, the motor torque, and the thermal model, in place of the mechanical model (92).

14. The method according to claim 1, wherein
the model creation step (S102, S502) creates the simulation model by using a plurality of detailed models and any one of simple models respectively corresponding to the detailed models, the one simple model being longer than a corresponding one of the detailed models in an interval of calculation steps, and further includes
an acquisition step of acquiring (S400) characteristics related to the physical characteristics to be observed, and
an observation step (S404) of simulating the physical characteristics to be observed by using the operation model created in the operation model creation step (S402), and
the operation model creation step (S402, S20 to S26) creates operation models corresponding to the physical characteristics to be observed, each of which is longer than a corresponding one of the detailed models in an interval of calculation steps, in an order that is in accordance with response times of the detailed models.

15. An arithmetic device comprising:
a model creator (30) configured to create a circuit model in which a plurality of element models each having information on electrical characteristics of a switching element are connected to each other;
an execution processor (40) configured to compute, by using information on electrical characteristics of each of the element models, a power generated at each time step by switching of the element model with respect to a predetermined time-series input value in time series; and
a thermal-model creator (60) configured to create a thermal model that outputs an output value based on an integrated value obtained by integrating the power generated at the each time step, in accordance with switching of the element model.
